# EUROPÄISCHE PATENTSCHRIFT

(11) **EP 0 726 216 B1**
(45) Veröffentlichungstag und Bekanntmachung des Hinweises auf die Patenterteilung: **09.09.1998**
(21) Anmeldenummer: 95119899.3
(22) Anmeldetag: 16.12.1995
(51) Int. Cl.: B65G 47/86, B67C 3/24

(54) **Transportstern für Gefässe**
Transporting star wheel for vessels
Roue de transport en forme d'étoile pour récipients

(30) Priorität: 07.02.1995 DE 29501897 U; 05.09.1995 DE 29514099 U; 30.09.1995 DE 19536692
(43) Veröffentlichungstag der Anmeldung: 14.08.1996
(73) Patentinhaber: Kronseder, Hermann, D-93086 Wörth (DE)
(72) Erfinder: Kronseder, Hermann, D-93086 Wörth (DE)

(56) Entgegenhaltungen:
- EP-A- 0 039 976
- EP-A- 0 695 704
- DE-C- 1 482 616
- DE-U- 8 914 924
- DE-U- 9 301 126
- US-A- 3 710 928
- US-A- 4 651 879

## Beschreibung

Die Erfindung betrifft einen Transportstern für Gefäße gemäß dem Oberbegriff des Anspruchs 1.

Es ist bereits ein derartiger Transportstern bekannt, bei dem jeder Spreizkörper durch zwei nach Art eines Keils angeordnete Hebel gebildet wird, die schwenkbar an einem Stößel gelagert sind und durch eine Feder elastisch aufgespreizt werden (DE-PS 1 482 616). Der Stößel ist radial verschiebbar im Grundkörper gelagert und wird durch eine weitere Feder elastisch nach innen in die Öffnungsposition gedrängt. Durch eine ortsfeste Steuerkurve werden die Stößel der zu schließenden Greifzangen entgegen der Federkraft radial nach außen bewegt, wobei die Spreizkörper zwischen die Gegenarme einfahren. Diese werden durch eine weitere Feder im Öffnungssinne vorgespannt.

Dieser bekannte Transportstern weist aufgrund der Vielzahl von Hebeln, Gelenken, Federn usw. sowie aufgrund der durchgehenden Schließkurve hohe Herstellungskosten auf. Die Störungsanfälligkeit, insbesondere beim Eindringen von Scherben, Gefäßbruchstücken oder dgl. ist groß; der Austausch beschädigter Teile ist schwierig und zeitraubend. Sein Einsatzbereich ist gering.

Weiter ist ein Transportstern für Gefäße bekannt, dessen Greifzangen durch schwenkbar an einem Grundkörper gelagerte Einfachhebel gebildet werden (US-A-4 651 879). Die Einfachhebel werden durch Blattfedern im Schließsinne beaufschlagt und durch drehbar zwischen ihnen im Grundkörper gelagerte Nocken zwangsweise geöffnet. Die erzielbare Klemmkraft ist hierbei gering und die Zentrierung der eingespannten Gefäße ist ungenau.

Schließlich ist in der älteren EP-A-0 695 704 ein Transportstern beschrieben, dessen Greifzangen durch schwenkbare Doppelhebel gebildet werden. Die Greifzangen werden durch drehbar zwischen ihren Gegenarmen im Grundkörper gelagerte Nocken zwangsweise geschlossen, wobei die Drehachsen der Nocken rechtwinklig zu den Schwenkachsen der zugehörigen Doppelhebel angeordnet sind.

Der Erfindung liegt die Aufgabe zugrunde, den Transportstern der eingangs genannten Art hinsichtlich Fertigungskosten, Betriebssicherheit und Einsatzmöglichkeiten wesentlich zu verbessern.

Diese Aufgabe wird erfindungsgemäß durch die im Kennzeichen des Anspruchs 1 angegebenen Merkmale gelöst.

Vorteilhafte Weiterbildungen der Erfindung sind in den Unteransprüchen enthalten. Die im Anspruch 7 angegebene Weiterbildung ermöglicht in besonders einfacher Weise eine Selbsthaltung der Nocken in der Schließposition und damit einen Verzicht auf eine durchgehende Schließkurve, während die Weiterbildung nach Anspruch 12 ohne Hilfe von störungsanfälligen Federelementen eine Fixierung der Öffnungsposition ermöglicht. Insgesamt zeigen die Unteransprüche den universellen Einsatzbereich eines erfindungsgemäßen Transportsterns auf.

Im Nachstehenden werden mehrere Ausführungsbeispiele der Erfindung anhand der Zeichnungen beschrieben. Es zeigen:
- Fig. 1: die teilweise Draufsicht auf eine erste Ausführungsform eines Transportsterns,
- Fig. 2: den Schnitt A-B nach Fig. 1,
- Fig. 3: die teilweise Draufsicht auf eine zweite Ausführungsform eines Transportsterns,
- Fig. 4: den Schnitt C-D nach Fig. 3,
- Fig. 5: die teilweise Draufsicht auf eine dritte Ausführungsform eines Transportsterns,
- Fig. 6: die teilweise Draufsicht auf eine vierte Ausführungsform eines Transportsterns,
- Fig. 7: den Schnitt E-F nach Fig. 6,
- Fig. 8: die teilweise Draufsicht auf eine fünfte Ausführungsform eines Transportsterns,
- Fig. 9: die Ansicht X nach Fig. 8,
- Fig. 10: die teilweise Draufsicht auf eine sechste Ausführungsform eines Transportsterns,
- Fig. 11: den Schnitt G-H nach Fig. 10.

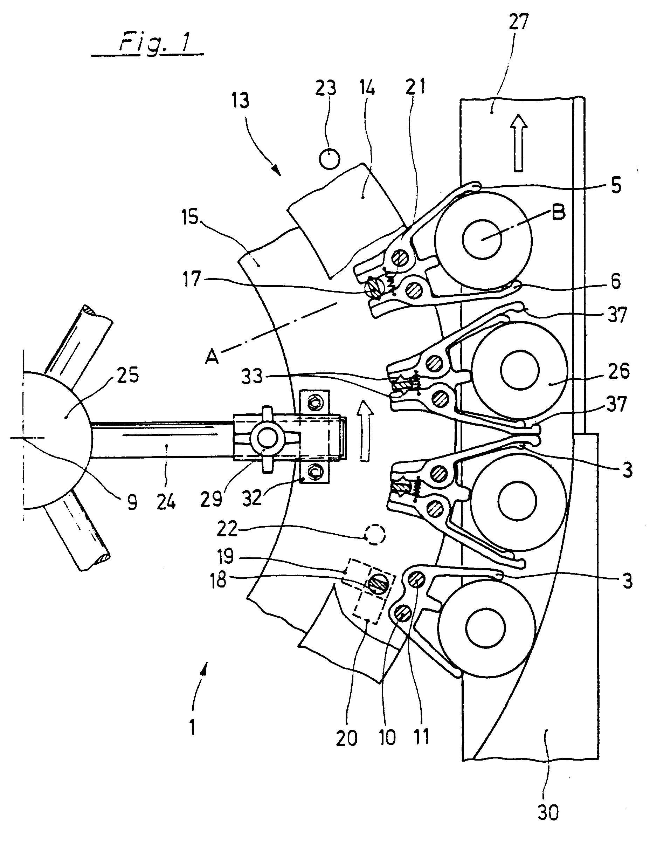

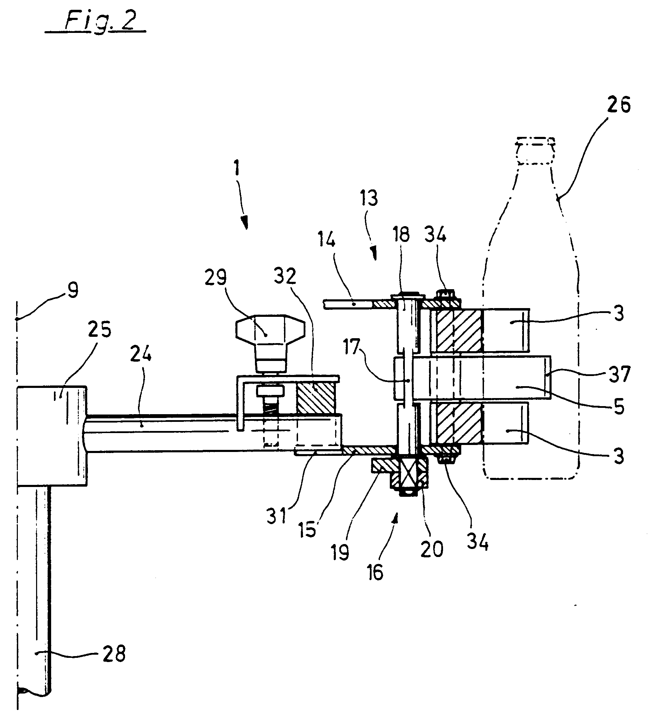

Der Transportstern 1 nach Fig. 1 und 2 ist zum Transportieren und Sortieren von aufrechtstehenden Gefäßen in Form von Flaschen 26 eingerichtet. Er ist in den Auslauf einer Flaschenbehandlungsmaschine, beispielsweise einer Inspektionsmaschine, integriert, von der nur der Auslaufbogen 30, der normale Abförderer 27 und eine Antriebswelle 28 für den Transportstern 1 dargestellt ist.

Der Transportstern 1 weist einen Grundkörper 13 auf, der im wesentlichen aus zwei parallelen, kreisförmigen Ringen 14, 15 besteht. Die beiden Ringe 14, 15 haben den gleichen Außendurchmesser. Die Innendurchmesser sind unterschiedlich, wobei der Innendurchmesser des oberen Ringes 14 kleiner ist als der Innendurchmesser des unteren Ringes 15. Die beiden Ringe 14, 15 sind konzentrisch angeordnet und durch eine Anzahl von über ihren Umfang verteilten Paaren von Bolzen 10, 11 mit kreisförmigem Querschnitt starr miteinander verbunden. Dabei ist jeder Bolzen 10, 11 mittels zweier Schrauben 34 einzeln lösbar zwischen den beiden Ringen 14, 15 fixiert.

Der untere Ring 15 weist an seiner Innenseite gleichmäßig über den Umfang verteilt mehrere rechteckige Aussparungen 31 auf, die von brückenförmigen Halteklötzen 32 überdeckt werden. Die am Ring 15 befestigten Halteklötze 32 sitzen lose auf den Enden von radialen Armen 24 einer Nabe 25, die ihrerseits auf der Antriebswelle 28 befestigt ist. Mittels mehrerer manuell betätigbarer Klemmvorrichtungen 29 ist der Grundkörper 13 auf den Armen 24 lösbar festgeklemmt und mit seiner Mittelachse 9 konzentrisch zur Antriebswelle 28 ausgerichtet.

Auf jedem Paar von zusammengehörigen, benachbarten Bolzen 10, 11 sitzen jeweils zwei gleichartige Taschen 3 in Form von getrennten Formteilen aus Kunststoff. Die Taschen 3 weisen eine U-förmige Gestalt auf, wobei die beiden Seitenschenkel zusammen mit einer am Mittelschenkel ausgebildeten Nase die eigentliche Sterntasche bilden, die an den Gefäßdurchmesser angepaßt ist und diesen nicht mehr als 180 Grad umgreift. Im Mittelschenkel jeder Tasche 3 sind ferner zwei parallele Bohrungen ausgebildet, mit denen die Tasche 3 stramm auf den Bolzen 10, 11 steckt. Die obere Tasche 3 schließt sich an den oberen Ring 14 und die untere Tasche 3 an den unteren Ring 15 unmittelbar an, wobei auf den Bolzen 10, 11 ein Freiraum verbleibt, der in etwa der Höhe einer Tasche 3 entspricht.

Zwischen den beiden Taschen 3 ist auf jedem Bolzen 10, 11 eine einstückig aus zähelastischem Kunststoff geformte Klammer 5, 6 schwenkbar gelagert. Die beiden Klammern 5, 6 eines Paares von Bolzen 10, 11 sind spiegelbildlich nach Art von Doppelhebeln ausgebildet. Die radial nach außen weisenden Hebel dienen als Greifarme und bilden zusammen eine Greifzange, welche die in den zugehörigen Taschen 3 sitzende Flasche 26 um mehr als 180 Grad umspannen. Die beiden radial nach innen weisenden Hebel bilden Gegenarme, an denen eine Zugfeder 21 befestigt ist. Diese zieht die Gegenarme zusammen und versucht so, die von zwei zusammengehörigen Klammern 5, 6 gebildete Greifzange zu öffnen.

Parallel zu jedem Paar von Bolzen 10, 11 und zwar mittig zwischen den Gegenarmen der zusammengehörigen Klammern 5, 6 ist in den Ringen 14, 15 jeweils eine Steuerwelle 18 drehbar gelagert. Diese weist auf Höhe der Gegenarme einen Nocken 17 mit ovalem Querschnitt auf, der direkt durch zwei parallele Abflachungen der Steuerwelle 18 gebildet wird. Liegt der Nocken 17 mit seinen parallelen Seitenflächen radial zur Mittelachse 9 des Transportsterns 1, so definiert er die Öffnungsposition seiner Klammern 5, 6, da in diesem Falle die Gegenarme durch die Zugfeder 21 maximal angenähert und dadurch die Greifarme maximal voneinander entfernt sind. In der Öffnungsposition kann eine Flasche 26 ungehindert in die Taschen 3 einlaufen. Liegt der Nocken 17 mit seinen parallelen Seitenflächen tangential zur Mittelachse 9 des Transportsterns 1, so definiert er die Schließposition seiner Klammern 5, 6, da hier die beiden Gegenarme entgegen der Kraft der Zugfeder 21 maximal auseinandergespreizt und die Gegenarme minimal, d.h. weniger als der Flaschendurchmesser voneinander entfernt sind. In der Schließposition liegen die Greifarme der Klammern 5, 6 unter leichter elastischer Durchbiegung an gegenüberliegenden Umfangsstellen einer in den Taschen 3 sitzenden Flasche 26 an und fixieren diese in den Taschen 3. Diese Greiffunktion wird durch wulstförmige Verdickungen 37 an den Enden der Klammern 5, 6 optimiert.

Das untere Ende jeder Steuerwelle 18 ragt etwas aus dem unteren Ring 15 heraus. Auf diesen vorstehenden Enden sind jeweils zwei Steuerhebel 19, 20 in rechtwinkeliger Formation befestigt. Diese wirken mit ortsfest an der Unterseite des Transportsterns 1 angeordneten Anschlägen 22, 23 zusammen und bilden mit diesen sowie mit den Nocken 17 und den Steuerwellen 18 eine Steuereinrichtung 16 für die Klammern 5, 6. Der erste Anschlag 22 ist höhenbeweglich und sitzt an der Innenseite der Umlaufbahn der Steuerwellen 18. Ist er nach oben in die Bewegungsbahn der inneren Steuerhebel 19 eingefahren, so schwenkt er diese aus der Öffnungsposition um 90 Grad in die Schließposition, wenn der Transportstern 1 in Pfeilrichtung rotiert. Ist der Anschlag 22 aus der Umlaufbahn der inneren Steuerhebel 19 ausgefahren, so verbleiben die passierenden Nocken 17 in der Öffnungsposition. Sie werden in dieser Position durch die Federelemente 21 zwischen den Gegenarmen der Klammern 5, 6 elastisch eingeklemmt. Auch in der Schließposition sind die Nocken 17 stabilisiert und zwar mit Hilfe von kerbenartigen Ausnehmungen 33 in den Gegenarmen der Klammern 5, 6, welche die Kanten eines in Schließposition befindlichen Nockens 17 elastisch einklemmen. Der zweite Anschlag 23 ist an der Außenseite der Umlaufbahn der Steuerwellen 18 bzw. in der Bewegungsbahn der äußeren Steuerhebel 20 starr angeordnet und schwenkt alle passierenden Nocken 17 mit Hilfe der äußeren Steuerhebel 20 aus der Schließposition in die Öffnungsposition.

Mit Hilfe der vorstehend im einzelnen beschriebenen Steuereinrichtung 16 können bestimmte Flaschen 26 im Endbereich des Auslaufbogens 30 durch die betreffenden Klammern 5, 6 in den betreffenden Taschen 3 fixiert werden. Sie verlassen dann nicht, wie die ungeklammerten Flaschen 26, den Transportstern 1 mit dem in Pfeilrichtung angetriebenen normalen Abförderer 27, sondern werden zu einem zweiten, nicht gezeigten Abförderer für fehlerhafte Flaschen 26 transportiert.

Wird beim Transportstern 1 eine Tasche 3 oder Klammer 5, 6 beschädigt, so wird die entsprechende Baugruppe, bestehend aus zwei benachbarten Bolzen 10, 11, zwei Taschen 3 und zwei Klammern 5, 6 nach Lösen der vier Schrauben 34 seitlich zwischen den Ringen 14, 15 herausgenommen. Danach werden die beschädigten Elemente von den Bolzen 10, 11 abgezogen und durch neue Elemente ersetzt. Dann wird die Baugruppe wieder zwischen die Ringe 14, 15 eingeschoben und durch die vier Schrauben 34 fixiert. Dieser Vorgang ist rasch und mühelos durchführbar; die Kosten für die Austauschteile sind äußerst gering. Zur Erleichterung dieses Vorgangs kann die aus dem Grundkörper 13 mit den Bolzen 10, 11 und den darauf steckenden Elementen gebildete Baueinheit nach Lösen der Klemmvorrichtungen 29 einfach und mühelos von der Nabe 25 abgenommen werden. In entsprechender Weise ist auch ein Austausch des Grundkörpers 13 gegen einen anderen Grundkörper, der für einen anderen Flaschendurchmesser eingerichtet ist, möglich.

Die Steuereinrichtung 16 wirkt sich bei den vorbeschriebenen Vorgängen nicht hinderlich aus, da zum einen die Anschläge 22, 23 beide unterhalb des Transportsterns 1 sitzen und dessen Abheben nicht stören. Zum anderen können die Gegenarme der Klammern 5, 6 von einem in der Öffnungsposition befindlichen Nocken 17 ungehindert abgezogen bzw. wieder auf diesen aufgeschoben werden, was durch die gerundete Formgebung des Nockens 17 und Abrundungen an den freien Enden der Gegenarme der Klammern 5, 6 noch begünstigt wird.

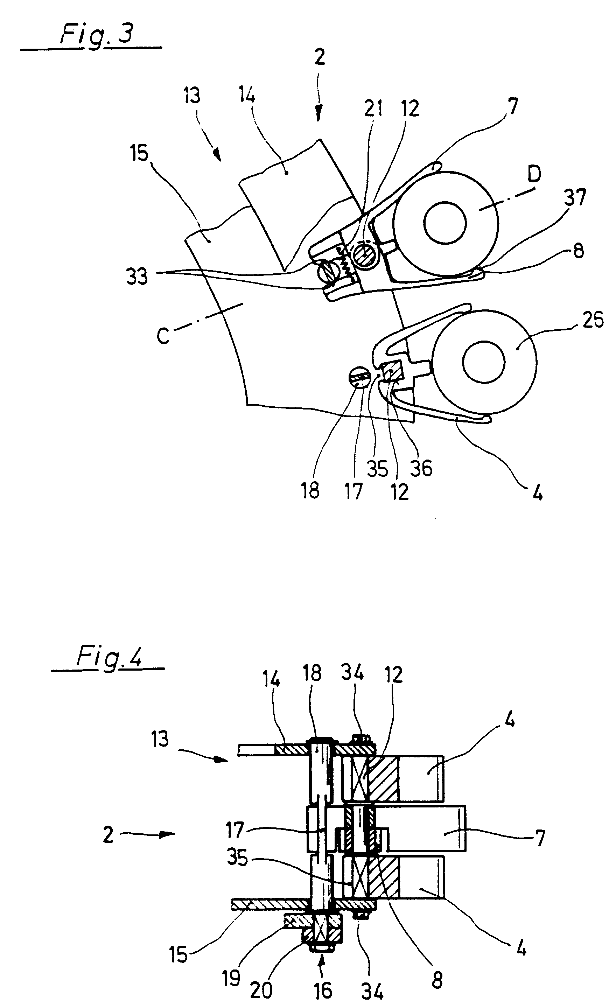

Der Transportstern 2 nach Fig. 3 und 4 stimmt teilweise mit dem Transportstern 1 überein. Im Folgenden werden nur die Abweichungen beschrieben.

Beim Transportstern 2 sind zwischen den Ringen 14 und 15 gleichmäßig über den Umfang verteilt einzelne Bolzen 12 parallel zur Mittelachse 9 mittels jeweils zweier Schrauben 34 lösbar befestigt. Jeder Bolzen 12 weist im unteren und oberen Bereich seiner Länge einen quadratischen und im dazwischenliegenden mittleren Bereich seiner Länge einen kreisförmigen Querschnitt auf. Auf den beiden Bereichen mit quadratischem Querschnitt ist jeweils eine Tasche 4 lösbar aufgeschnappt. Die Taschen 4 bestehen aus separaten Formteilen aus Kunststoff und haben die gleiche U-förmige Grundform. Dabei bilden die beiden Seitenschenkel zusammen mit einer Nase im Mittelschenkel die eigentliche Sterntasche, welche an den Durchmesser der Gefäße 26 angepaßt ist und diese um nicht mehr als 180 Grad umfaßt. Aufgrund der Elastizität des gewählten Kunststoffs, beispielsweise eines auch für die Taschen 3 und die Klammern 5 bis 8 bevorzugten Verbunds aus PA und PE, ist in gewissen Grenzen eine Anpassung an unterschiedliche Flaschendurchmesser gegeben, genauso wie auch bei den Taschen 3 des Transportsterns 1. Der Mittelschenkel der Taschen 4 weist eine quadratische Bohrung 35 auf, die zur Innenseite des Transportsterns 2 hin durch einen Schlitz 36 geöffnet ist. Im Bereich des Schlitzes 36 ist die Klammer 4 abgerundet, so daß sie bei Aufbringung einer entsprechenden radialen Kraft auf den Bolzen 12 aufgeschnappt bzw. von diesem abgezogen werden kann. Durch die quadratische Formgebung von Bolzen 12 und Bohrung 35 ist gleichzeitig eine Drehsicherung der Klammer 4 gegeben. Das Abziehen und Aufschnappen wird noch dadurch erleichtert, daß bei einem Zusammendrücken der freien Enden der Seitenschenkel der Klammer 4 der Schlitz 36 vergrößert wird. Beim Transportstern 2 ist somit ein Austausch einzelner Klammern 4 besonders schnell und ohne Werkzeug durchführbar, wobei die Bolzen 12 nicht entfernt werden müssen.

Im mittleren, zylindrischen Bereich jedes Bolzens 12 sind dicht übereinander zwei Klammern 7, 8 schwenkbar gelagert. Abgesehen von dem Unstand, daß diese beiden Klammern 7, 8 auf dem gleichen Bolzen 12 schwenkbar gelagert sind, entsprechend sie in ihrer Grundform und in ihrer Funktion sowie hinsichtlich des Aufbaus ihrer Steuereinrichtung 16 den Klammern 5, 6 des Transportsterns 1. Auch das Austauschen beschädigter Klammern 7, 8 durch seitliches Herausnehmen des betreffenden Bolzens 12 zwischen den Ringen 14 und 15 nach Lösen zweier Schrauben 34 entspricht ansonsten dem bereits beschriebenen Reparaturvorgang beim Transportstern 1.

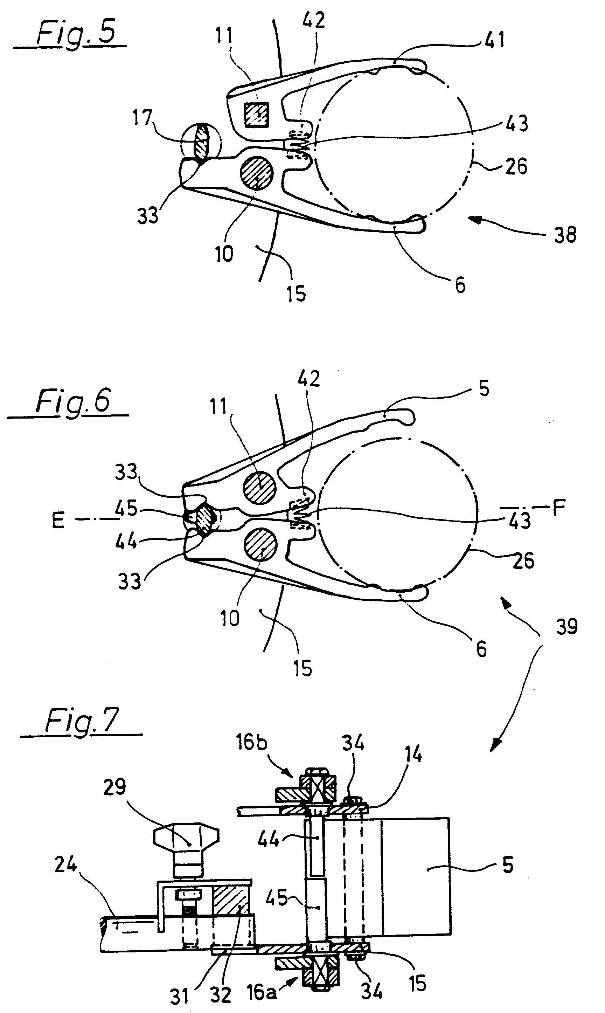

Die Transportsterne 38, 39, 40 nach den Fig. 5 bis 9 weisen wie der Transportstern 1 nach Fig. 1 und 2 einen Grundkörper 13 mit einem oberen Ring 14 und einem unteren Ring 15 auf, die durch mehrere Paare von parallelen Bolzen 10, 11 miteinander verbunden sind. Die Sterntaschen werden bei diesen drei Aus führungsformen direkt durch die zusammengehörigen Paare von hebelförmigen Klammern bzw. durch die von diesen gebildeten Greifzangen gebildet; U-förmige Taschen 3 oder 4 sind hier nicht vorhanden.

Beim Transportstern 38 nach Fig. 5 ist nur auf dem einen Bolzen 10 eine schwenkbare Klammer 6 gelagert. Bei der anderen Klammer 41 ist kein Gegenarm vorhanden. Die Klammer 41 weist vielmehr eine Bohrung mit quadratischem Querschnitt auf und ist mit dieser drehfest jedoch lösbar auf den mit entsprechend quadratischem Querschnitt versehenen Bolzen 11 aufgesteckt. Beide Klammern 6, 41 weisen als Anschlag für die Flaschen 26 radial nach außen gerichtete Nasen 42 auf, zwischen die eine Druckfeder 43 eingesetzt ist. Diese sucht die Greifarme voneinander zu entfernen bzw. die durch die Klammern 6, 41 gebildete Greifzange zu öffnen. Der Nocken 17 betätigt nur die schwenkbare Klammer 6 und wird durch deren Ausnehmung 33 in Verbindung mit der elastischen Verformung beim Erfassen einer Flasche 26 in seiner Schließposition stabilisiert. Die Stabilisierung in der Öffnungsposition erfolgt durch die Druckfeder 43.

Beim Transportstern 39 nach Fig. 6 und 7 ist auf jedem Bolzen 10, 11 eine schwenkbare Klammer 5, 6 gelagert. Beide Klammern 5, 6 sind mit Ausnehmungen 33 an den Gegenarmen sowie mit Nasen 42 versehen und werden durch eine Druckfeder 43 im Öffnungssinne vorgespannt. Jeder Klammer 5, 6 ist ein eigener Nocken 44, 45 zugeordnet. Der untere Nocken 45 erstreckt sich in etwa über die Hälfte des Abstands zwischen den beiden Ringen 14, 15 und ist im unteren Ring 15 gelagert; der obere Nocken 44 erstreckt sich in etwa über die andere Hälfte des Abstands zwischen den beiden Ringen 14, 15 und ist im oberen Ring 14 drehbar gelagert. Die beiden Nocken 44, 45 bzw. ihre Drehachsen liegen konzentrisch zueinander. Jeder von ihnen weist eine eigene Steuereinrichtung 16a, 16b auf, die entsprechend über bzw. unter dem Transportstern 39 angeordnet ist. Der Aufbau der Steuereinrichtungen 16a, 16b entspricht im wesentlichen demjenigen der Steuereinrichtung 16 nach Fig. 1 und 2. Auf diese Weise kann jeder Nocken 44, 45 unabhängig für sich gesteuert werden und somit jede Klammer 5, 6 unabhängig von der anderen Klammer öffnen bzw. schließen. Hierzu ist es erforderlich, die Nocken 44, 45 asymmetrisch auszubilden, wie in Fig. 6 gezeigt ist, so daß sie nur an der zugeordneten Klammer angreifen. Statt dessen ist es auch möglich, identische symmetrische Nocken einzusetzen, wenn die Klammern im Bereich der Nocken wechselseitig freigeschnitten sind. Mit einer derartigen Anordnung ist beim Erfassen und Freigeben eine gezielte Öffnung und Schließung der vorlaufenden oder nachlaufenden Klammer 5, 6 möglich, was insbesondere bei einer Abstandsänderung der Flaschen 26 beim Einlauf in bzw. beim Auslauf aus dem Transportstern 39 vorteilhaft ist.

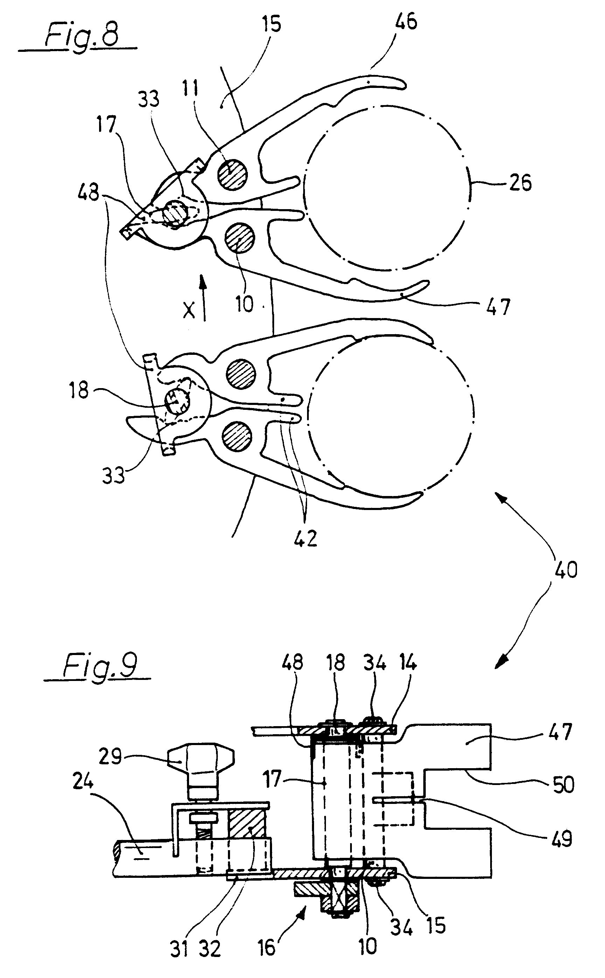

Beim Transportstern 40 nach Fig. 8 und 9 ist wiederum auf jedem Bolzen 10, 11 eine schwenkbare Klammer 46, 47 mit einer Nase 42 und mindestens einer Ausnehmung 33 im Gegenarm drehbar gelagert. Es ist jedoch weder eine Zugfeder 21 noch eine Druckfeder 43 vorhanden. Statt dessen erfolgt die Stabilisierung der Klammern 46, 47 in der Öffnungsposition durch einen drehfest mit dem beide Klammern steuernden Nocken 17 verbundenen Mitnehmer 48. Dieser ist auf der Steuerwelle 18 des Nockens 17 befestigt und weist die Form eines Doppelhebels mit U-förmigem, nach unten hin offenem Längsschnitt auf. Der horizontale Schenkel des Mitnehmers 48 verläuft durch einen Spalt zwischen dem oberen Ring 14 und der oberen Stirnfläche der Klammern 46, 47. Die beiden nach unten hin abstehenden Seitenschenkel übergreifen die Außenseiten der Gegenarme der Klammern 46, 47. Diese Außenseiten weisen einen unterschiedlichen kurvenförmigen Verlauf auf, der derart gestaltet ist, daß der Mitnehmer 48 beim Übergang von der Schließposition in die Öffnungsposition des Nockens 17 die Gegenarme der Klammern 46, 47 aufeinander zu drückt bzw. hält, so daß die durch die Klammern gebildete Greifzange geöffnet wird bzw. bleibt. In der durch den Nocken 17 erzwungenen Schließposition der Greifzange hat der Mitnehmer 48 keine Funktion. Dieser Transportstern 40 hat eine besondere hohe Betriebssicherheit, da Funktionsstörungen durch Federbruch mit Sicherheit ausgeschlossen sind. Er ist daher besonders gut zum Ersatz für einen normalen Einlaufstern oder Auslaufstern in einer Gefäßbehandlungsmaschine geeignet und ermöglicht einen Verzicht auf einen Führungsbogen.

Um eine bessere Anpassung an die Gefäßform zu ermöglichen, sind die beiden Klammern 46, 47, die im wesentlichen den gesamten Abstand zwischen den Ringen 14 und 15 überdecken, im Bereich der Greifarme verbreitert sowie mit einem Schlitz 49 und einer Aussparung 50 versehen. In diese Aussparung 50 kann die nicht gezeigte Klammer eines vorausgehenden oder nachfolgenden Transportsterns eingreifen.

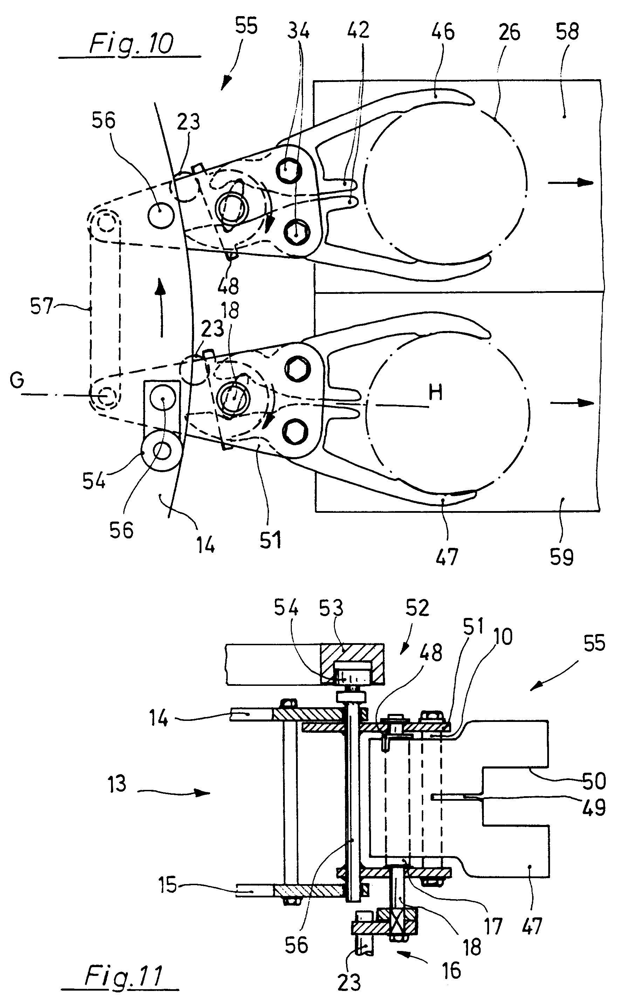

Der Transportstern 55 nach Fig. 10 und 11 stimmt hinsichtlich der Form der Klammern 46, 47 und der Steuereinrichtungen 16, 17, 18, 48 mit dem Transportstern 40 nach Fig. 8 und 9 überein. Jedoch sind hier die zusammengehörigen Bolzen 10, 11 mittels der Schrauben 34 zwischen den beiden parallelen Platten eines eigenen Lagerkörpers 51 lösbar befestigt. In diesem Lagerkörper 51, der zwischen den Ringen 14, 15 des Tragkörpers 13 sitzt, ist auch die Steuerwelle 18 mit dem Nocken 17 und dem Mitnehmer 48 drehbar gelagert. Der Lagerkörper 51 ist mittels einer Achse 56, auf der seine beiden Platten befestigt sind, schwenkbar in den Ringen 14, 15 des Grundkörpers 13 gelagert und zwar parallel zu dessen Mittelachse 9.

Am oberen Ende der Achse 56, das aus dem oberen Ring 14 heraussteht, ist ein Hebel mit einer Kurvenrolle 54 befestigt. Diese greift in eine ortsfeste, in sich geschlossene Steuerkurve 53 ein. Die so gebildete Antriebseinrichtung (52) steuert die Schwenkung bzw. Stellung der Lagerkörper 51 relativ zum Grundkörper 13, wenn dieser in Pfeilrichtung rotiert. Es kann sowohl jeder Lagerkörper 51 mit einem eigenen Rollenhebel als auch eine Gruppe von Lagerkörpern 51 mit einem gemeinsamen Rollenhebel versehen sein. Der zweite Fall ist in Fig. 10 gezeigt. Hier sind z.B. zwei benachbarte Lagerkörper 51 durch eine Stange 57 gelenkig miteinander verbunden, so daß sie jeweils gemeinsam geschwenkt werden. Einer der beiden Lagerkörper 51 ist mit einer Kurvenrolle 54 ausgestattet, die die ortsfeste Steuerkurve 53 abtastet. Diese ist so gestaltet, daß die beiden Lagerkörper 51 mit den Klammern 46, 47 beim Passieren zweier radial zur Mittelachse 9 angeordneter Förderbänder 58, 59 entgegen der Umlaufrichtung des Grundkörpers 13 in Pfeilrichtung verschwenkt werden. Dadurch können die Flaschen 26 nahezu stillstehend an die Förderbänder 58, 59 übergeben werden, welche in Pfeilrichtung kontinuierlich angetrieben werden. Der Transportstern 55 dient somit zum Aufteilen der Gefäße 26 auf mehrere Bahnen. Das gleichzeitige Öffnen der beiden Greifzangen kann durch entsprechend höhenversetzt oder höhenbeweglich angeordnete Anschläge 23 problemlos erzielt werden.

## Patentansprüche

1. Transportstern (1) für Gefäße mit einem drehbaren Grundkörper (13) und mehreren an dessen Umfang angeordneten, durch jeweils zwei schwenkbar auf am Grundkörper befestigten Bolzen (10, 11, 12) gelagerten Klammern (5, 6; 7, 8; 46, 47) gebildeten Greifzangen, wobei die Klammern als Doppelhebel mit radial nach außen weisenden Greifarmen und radial nach innen weisenden Gegenarmen ausgebildet sind, an denen eine Steuereinrichtung (16) mit einem beweglich am Grundkörper gelagerten, die Gegenarme in der Schließposition auseinanderdrängenden Spreizkörper angreift, dadurch gekennzeichnet, daß die Steuereinrichtung (16) mindestens einen parallel zu den Bolzen (10, 11, 12) drehbar im Grundkörper (13) gelagerten Nocken (17, 44, 45) aufweist, der zwischen den Gegenarmen von zusammengehörigen Klammern (5, 6; 7, 8; 46, 47) sitzt und in mindestens einer Winkelposition (Schließposition) die beiden benachbarten Gegenarme auseinanderdräng und in mindestens einer anderen Winkelposition (Öffnungsposition) eine Annäherung der Gegenarme zuläßt.

2. Transportstern nach Anspruch 1, dadurch gekennzeichnet, daß der Grundkörper (13) zwei parallele Scheiben und/oder Ringe (14, 15) aufweist, zwischen denen die Bolzen (10, 11, 12) mit den darauf angeordneten Klammern (5, 6; 7, 8; 46, 47) lösbar befestigt sind.

3. Transportstern nach Anspruch 1 oder 2, dadurch gekennzeichnet, daß der Nocken (17, 44, 45) im wesentlichen durch zwei parallele Abflachungen einer Steuerwelle (18) gebildet wird, die parallel zu den Bolzen (10, 11, 12) drehbar im Grundkörper (13) gelagert ist.

4. Transportstern nach einem der Ansprüche 1 bis 3, dadurch gekennzeichnet, daß am Nocken (17, 44, 45) oder an der Steuerwelle (18) mindestens ein Steuerhebel (19, 20) befestigt ist, der zusammen mit ortsfest an der Umlaufbahn des Transportsterns (1, 2, 38, 39, 40, 55) starr oder steuerbar angeordneten Anschlägen (22, 23) eine Verstellung des Nockens (17, 44, 45) und damit ein Öffnen bzw. Schließen der Klammern (5, 6; 7, 8; 46, 47) bewirkt.

5. Transportstern nach einem der Ansprüche 1 bis 4, dadurch gekennzeichnet, dadurch gekennzeichnet, daß der Grundkörper (13) mit den Bolzen (10, 11, 12) und den darauf fixierten Klammern (5, 6; 7, 8; 46, 47) eine ringförmige Baueinheit bildet, die lösbar auf einer mit mehreren radialen Armen (24) ausgestatteten Nabe (25) befestigt ist.

6. Transportstern nach einem der Ansprüche 1 bis 5, dadurch gekennzeichnet, daß über die Gegenarme zweier zusammengehöriger Klammern (5, 6; 7, 8) eine Zugfeder (21) gespannt ist.

7. Transportstern nach einem der Ansprüche 1 bis 6, dadurch gekennzeichnet, daß die Gegenarme zweier zusammengehöriger Klammern (5, 6; 7, 8; 46, 47) mit den Nocken (17, 44, 45) in der Schließposition stabilisierenden Ausnehmungen (33) versehen sind.

8. Transportstern nach einem der Ansprüche 1 bis 7, dadurch gekennzeichnet, daß die Klammern (5, 6; 7, 8; 46, 47) aus Kunststoff bestehen.

9. Transportstern nach einem der Ansprüche 1 bis 8, dadurch gekennzeichnet, daß von zwei eine Greifzange bildenden Klammern nur eine Klammer (6) schwenkbar gelagert und durch den Nocken (17) steuerbar ist, während die andere Klammer (41) drehfest am Grundkörper (13) fixiert ist.

10. Transportstern nach einem der Ansprüche 1 bis 8, dadurch gekennzeichnet, daß von zwei eine Greifzange bildenden Klammern jede Klammer (5, 6) durch einen eigenen Nocken (44, 45) unabhängig steuerbar ist.

11. Transportstern nach Anspruch 10, dadurch gekennzeichnet, daß die beiden Nocken (44, 45) von zwei eine Greifzange bildenden Klammern (5, 6) koaxial übereinander im Grundkörper (13) gelagert sind.

12. Transportstern nach einem der Ansprüche 1 bis 11, gekennzeichnet durch mindestens einen drehfest mit einem Nocken (17) verbundenen Mitnehmer (48), der mindestens eine zugehörige Klammer (46, 47) in der Öffnungsposition stabilisiert.

13. Transportstern nach Anspruch 12, dadurch gekennzeichnet, daß der Mitnehmer (48) an mindestens einem Gegenarm einer Klammer (46, 47) angreift, wenn der Nocken (17) seine Öffnungsposition einnimmt.

14. Transportstern nach Anspruch 13, dadurch gekennzeichnet, daß der Mitnehmer (48) U-förmig ausgebildet ist und mit seinen freien Schenkeln an der Außenseite zweier eine Greifzange bildenden Klammern (46, 47) angreift.

15. Transportstern nach Anspruch 14, dadurch gekennzeichnet, daß die Gegenarme zweier eine Greifzange bildenden Klammern (46, 47) an der Außenseite eine unterschiedliche Kurvenform aufweisen.

16. Transportstern nach einem der Ansprüche 1 bis 15, dadurch gekennzeichnet, daß die eine Greifzange bildenden Klammern (46, 47) und der bzw. die zugehörigen Nocken (17) in einem eigenen Lagerkörper (51) aufgenommen sind, der seinerseits schwenkbar im Grundkörper (13) gelagert und mit einer Antriebseinrichtung (52) für seine Schwenkbewegung verbunden ist.

17. Transportstern nach Anspruch 16, dadurch gekennzeichnet, daß der Lagerkörper (51) zwei parallele Platten aufweist, zwischen denen die Klammern (46, 47) und Nocken (17) angeordnet sind.

18. Transportstern nach Anspruch 16 oder 17, dadurch gekennzeichnet, daß die Antriebseinrichtung (52) mindestens eine ortsfeste Steuerkurve (53) und mindestens eine, mit mindestens einem Lagerkörper (51) verbundene Kurvenrolle (54) aufweist.

19. Transportstern nach einem der Ansprüche 16 bis 18, dadurch gekennzeichnet, daß mehrere Lagerkörper (51) zur gemeinsamen Schwenkung gelenkig miteinander verbunden sind.

## Claims

1. A transport star (1) for vessels, having a rotatable base body (13) and a plurality of gripping tongs (5, 6; 7, 8; 46, 47) which are distributed at the periphery thereof and which are each formed by two clamps which are swivel-mounted on pins (10, 11, 12) fixed to the base body, wherein the clamps are constructed as double levers comprising radially outwardly pointing gripping arms and radially inwardly pointing counter-arms on which a spreading body of a control device (16) acts, which spreading body is movably mounted on the base body and which pushes the counter-arms apart in the closing position, characterised in that the control device (16) comprises at least one cam (17, 44, 45), which is mounted in the base body (13) so that it can rotate parallel to the pins (10, 11, 12), which is seated between the counter-arms of associated clamps (5, 6; 7, 8; 46, 47), and which in at least one angular position (the closing position) pushes the two adjacent counter-arms apart and in at least one other position (the opening position) allows the counter-arms to approach each other.

2. A transport star according to claim 1, characterised in that the base body (13) comprises two parallel discs and/or rings (14, 15), between which the pins (10, 11, 12) with the clamps (5, 6; 7, 8; 46, 47) disposed thereon are detachably secured.

3. A transport star according to claim 1 or 2, characterised in that the cam (17, 44, 45) is substantially formed by two parallel flats on a camshaft (18), which is mounted in the base body (13) so that it can rotate parallel to the pins (10, 11, 12).

4. A transport star according to any one of claims 1 to 3, characterised in that at least one control lever (19, 20) is fixed to the cam (17, 44, 45) or to the camshaft (18), which control lever, together with stops (22, 23) which are fixedly disposed, rigidly or controllably, on the path of circulation of the transport star (1, 2, 38, 39, 40, 55), effects an adjustment of the cam (17, 44, 45) and thus effects opening or closing of the clamps (5, 6; 7, 8; 46, 47).

5. A transport star according to any one of claims 1 to 4, characterised in that the base body (13), with the pins (10, 11, 12) and the clamps (5, 6; 7, 8; 46, 47) fixed thereon, forms an annular constructional unit which is detachably fastened to a hub (25) which is equipped with a plurality of radial arms (24).

6. A transport star according to any one of claims 1 to 5, characterised in that a tension spring (21) is tensioned via the counter-arms of two associated clamps (5, 6; 7, 8).

7. A transport star according to any one of claims 1 to 6, characterised in that the counter-arms of two associated clamps (5, 6; 7, 8; 46, 47) are provided with recesses (33) which stabilise the cam (17, 44, 45) in the closing position.

8. A transport star according to any one of claims 1 to 7, characterised in that the clamps (5, 6; 7, 8; 46, 47) consist of plastics material.

9. A transport star according to any one of claims 1 to 8, characterised in that only one clamp (6) of two clamps which form a gripping tongs unit is swivel-mounted and controllable by the cam (17), whilst the other clamp (41) is attached rotationally fixed to the base body (13).

10. A transport star according to any one of claims 1 to 8, characterised in that each clamp (5, 6) of two clamps forming a gripping tongs unit is independently controllable by a separate cam (44, 45).

11. A transport star according to claim 10, characterised in that the two cams (44, 45) of two clamps (5, 6) forming a gripping tongs unit are mounted coaxially superimposed in the base body (13).

12. A transport star according to any one of claims 1 to 11, characterised by at least one catch (48), which is attached rotationally fixed to a cam (17) and which stabilises at least one associated clamp (46, 47) in the opening position.

13. A transport star according to claim 12, characterised in that the catch (48) acts on at least one counter-arm of a clamp (46, 47) when the cam (17) assumes its opening position.

14. A transport star according to claim 13, characterised in that the catch (48) is of U-shaped construction and its free limbs act on the outer face of two clamps (46, 47) forming a gripping tongs unit.

15. A transport star according to claim 14, characterised in that the counter-arms of two clamps (46, 47) forming a gripping tongs unit have a varying curve form on their outer face.

16. A transport star according to any one of claims 1 to 15, characterised in that the clamps (46, 47) forming a gripping tongs unit and the associated cam or cams (17) are seated in a separate bearing body (51) which in turn is swivel-mounted in the base body (13) and is connected to a drive device (52) for its swivelling movement.

17. A transport star according to claim 16, characterised in that the bearing body (51) comprises two parallel plates, between which the clamps (46, 47) and cams (17) are disposed.

18. A transport star according to claims 16 or 17, characterised in that the drive device (52) comprises at least one fixed radial cam (53) and at least one cam roller (54) which is attached to at least one bearing body (51).

19. A transport star according to any one of claims 16 to 18 characterised in that a plurality of bearing bodies (51) are joined articulated to each other for combined swivelling.

## Revendications

1. Etoile de transport (1) pour des récipients, comprenant un corps de base (13) et plusieurs pinces prévues à la périphérie du corps de base, formées chacune par deux doigts (5, 6 ; 7, 8 ; 46, 47) montés pivotants sur des goujons (10, 11, 12) solidaires du corps de base, les doigts étant réalisés sous la forme de doubles leviers avec des bras de préhension dirigés radialement vers l'extérieur et des contre-bras dirigés radialement vers l'intérieur, sur lesquels agit une installation de commande (16) comportant un organe d'écartement monté mobile sur le corps de base et qui écarte les contre-bras pour les mettre en position de fermeture,
caractérisée en ce que
l'installation de commande (16) comporte au moins une came (17, 44, 45) montée en rotation sur le corps de base (13) parallèlement au goujon (10, 11, 12), cette came étant logée entre les contre-bras des doigts correspondants (5, 6 ; 7, 8 ; 46, 47) et dans au moins une position angulaire (position de fermeture) elle écarte les deux contre-bras voisins et dans au moins une autre position angulaire (position d'ouverture) elle autorise le rapprochement des contre-bras.

2. Etoile de transport selon la revendication 1,
caractérisée en ce que
le corps de base (13) comporte deux disques et/ou anneaux parallèles (14, 15) entre lesquels sont fixés de manière amovible les goujons (10, 11, 12) portant les doigts (5, 6 ; 7, 8 ; 46, 47).

3. Etoile de transport selon la revendication 1 ou 2,
caractérisée en ce que
la came (17, 44, 45) est formée essentiellement par deux méplats parallèles d'un arbre de commande (18) logé à rotation dans le corps de base (13) parallèlement aux goujons (10, 11, 12).

4. Etoile de transport selon l'une des revendications 1 à 3,
caractérisée en ce qu'
au moins un levier de commande (19, 20) est fixé sur la came (17, 44, 45) ou sur l'arbre de commande (18), et en combinaison avec des butées (22, 23) montées à un emplacement fixe sur la trajectoire de l'étoile de transport (1, 2, 38, 39, 40, 55) ou commandées, ce levier produit un déplacement de la came (17, 44, 45) et ainsi l'ouverture ou la fermeture des doigts (5, 6 ; 7, 8 ; 46, 47).

5. Etoile de transport selon l'une des revendications 1 à 4,
caractérisée en ce que
le corps de base (13) avec les goujons (10, 11, 12) et les doigts (5, 6 ; 7, 8 ; 46, 47) montés sur les goujons, constitue un ensemble de construction de forme annulaire, fixé de manière amovible sur un moyeu (25) équipé de plusieurs bras radiaux (24).

6. Etoile de transport selon l'une des revendications 1 à 5,
caractérisée en ce que
les deux contre-bras de deux doigts correspondants (5, 6 ; 7, 8) sont reliés par un ressort de traction (21).

7. Etoile de transport selon l'une des revendications 1 à 6,
caractérisée en ce que
les contre-bras de deux doigts correspondants (5, 6 ; 7, 8 ; 46, 47) sont munis de cavités (33) stabilisant les cames (17, 44, 45) en position de fermeture.

8. Etoile de transport selon l'une des revendications 1 à 7,
caractérisée en ce que
les doigts (5, 6 ; 7, 8 ; 47, 48) sont en matière plastique.

9. Etoile de transport selon l'une quelconque des revendications 1 à 8,
caractérisée en ce qu'
un seul (6) des deux doigts formant une pince est monté pivotant et commandé par la came (17) alors que l'autre doigt (41) est monté fixe sur le corps de base (13).

10. Etoile de transport selon l'une des revendications 1 à 8,
caractérisée en ce que
chacun des deux doigts (5, 6) formant une pince se commande indépendamment par sa propre came (44, 45).

11. Etoile de transport selon la revendication 10,
caractérisée en ce que
les deux cames (44, 45) de deux doigts (5, 6) formant une pince sont montées coaxialement l'une sur l'autre sur le corps de base (13).

12. Etoile de transport selon l'une des revendications 1 à 11,
caractérisée par
au moins un organe d'entraînement (48) relié solidairement en rotation à une came (17) et qui stabilise au moins un doigt correspondant (46, 47) en position d'ouverture.

13. Etoile de transport selon la revendication 12,
caractérisée en ce que
l'organe d'entraînement (48) agit sur au moins un contre-bras d'un doigt (46, 47) lorsque la came (17) prend sa position d'ouverture.

14. Etoile de transport selon la revendication 13,
caractérisée en ce que
l'organe d'entraînement (48) est en forme de U et, par ses branches libres, il arrive sur le côté extérieur de deux doigts (46, 47) formant une pince.

15. Etoile de transport selon la revendication 14,
caractérisée en ce que
les contre-bras de deux doigts (46, 47) formant une pince présentent sur leur côté extérieur une forme de courbe différente.

16. Etoile de transport selon l'une des revendications 1 à 15,
caractérisée en ce que
les doigts (46, 47) formant une pince et la ou les cames (17) correspondantes sont logés dans un corps formant un palier (51) indépendant, lui-même monté pivotant dans le corps de base (13) et relié à une installation d'entraînement (52) assurant son mouvement de pivotement.

17. Etoile de transport selon la revendication 16,
caractérisée en ce que
le corps de base (51) comporte deux plaques parallèles entre lesquelles se trouvent les doigts (46, 47) et les cames (17).

18. Etoile de transport selon l'une quelconque des revendications 16 ou 17,
caractérisée en ce que
l'installation d'entraînement (52) comporte au moins une came de commande (53) fixe et au moins un galet suiveur de came (54), relié au corps formant palier (51).

19. Etoile de transport selon l'une des revendications 16 à 18,
caractérisée par
plusieurs corps formant paliers (51) reliés de manière articulée pour pivoter en commun.
